# EUROPÄISCHE PATENTSCHRIFT

(11) **EP 2 844 507 B1**
(45) Veröffentlichungstag und Bekanntmachung des Hinweises auf die Patenterteilung: **28.12.2016**
(21) Anmeldenummer: 13729636.4
(22) Anmeldetag: 05.06.2013
(51) Int. Cl.: B60K 7/00

(54) **RADANTRIEBSEINHEIT FÜR EIN RAD EINES ELEKTRISCH ANGETRIEBENEN FAHRZEUGS, FAHRZEUG UND ENTSPRECHENDES VERFAHREN**
WHEEL DRIVE UNIT FOR A WHEEL OF AN ELECTRICALLY DRIVEN VEHICLE, VEHICLE AND CORRESPONDING METHOD
UNITÉ D'ENTRAÎNEMENT DE ROUE DESTINÉ À UNE ROUE D'UN VÉHICULE ÉLECTRIQUE, VÉHICULE ET PROCÉDÉ CORRESPONDANT

(30) Priorität: 15.06.2012 DE 102012210129
(43) Veröffentlichungstag der Anmeldung: 11.03.2015
(73) Patentinhaber: Siemens Aktiengesellschaft, 80333 München (DE)
(72) Erfinder: BACHMAIER, Georg, 80469 München (DE); BACHMANN, Christian, 80339 München (DE); BERGMANN, Dominik, 83679 Sachsenkam (DE); GERLICH, Matthias, 80636 München (DE); GÖDECKE, Andreas, 81677 München (DE); PAIS, Guillaume, 81667 München (DE)
(86) Internationale Anmeldenummer: PCT/EP2013/061565
(87) Internationale Veröffentlichungsnummer: WO 2013/186097

(56) Entgegenhaltungen:
- EP-A1- 1 719 656
- WO-A1-2008/062053
- DE-A1- 10 029 628
- FR-A1- 2 936 206

## Beschreibung

Die Erfindung betrifft eine Radantriebseinheit, insbesondere Nabenantriebseinheit, für ein Rad eines elektrisch angetriebenen Fahrzeugs, mit einer elektrischen Maschine zum Antreiben des Rades, welche einen Stator und einen am Stator drehbar gelagerten Rotor aufweist, der mit dem Rad des Fahrzeugs verbunden wird, und mit einer elektronischen Steuereinrichtung zum Ansteuern der elektrischen Maschine. Die Erfindung betrifft außerdem ein elektrisch angetriebenes Fahrzeug, wie auch ein Verfahren zum Betreiben einer genannten Radantriebseinheit.

Vorliegend richtet sich das Interesse auf ein elektrisch angetriebenes Fahrzeug, nämlich vorzugsweise ein elektrisch angetriebenes Kraftfahrzeug, also Elektrofahrzeug. Es ist bereits Stand der Technik, bei einem solchen Elektrofahrzeug Radantriebseinheiten separat für die Räder des Kraftfahrzeugs einzusetzen, welche als radnahe Antriebseinheiten oder aber als Radnabenmotoren ausgeführt sein können. Die Radantriebseinheit dient dabei zum Antreiben eines einzelnen Rades. So kann für jedes Rad des Fahrzeugs eine solche Radantriebseinheit vorgesehen sein; alternativ können jedoch nur zwei Räder des Fahrzeugs mit jeweils einer Radantriebseinheit ausgestattet werden, nämlich entweder die hinteren Räder oder aber die vorderen Räder.

Werden für die Räder des Kraftfahrzeugs separate Radantriebseinheiten eingesetzt, so ergeben sich insbesondere Vorteile bezüglich der Fahrsicherheit, der Fahrleistung, wie auch der Effizienz. Außerdem ist es möglich, einen Großteil der Energie beim Abbremsen des Fahrzeugs zurück zu gewinnen, was durch elektromotorisches Bremsen der elektrischen Maschinen möglich ist. Das Zurückgewinnen der Energie wird auch als "Rekuperation" bezeichnet. Hierbei wird die kinetische Energie des jeweiligen Rades bzw. die Bremsenergie in elektrische Energie umgewandelt, welche wiederum in einen elektrischen Energiespeicher gespeist und zum Aufladen des Speichers genutzt werden kann. Weil eben die Radnabenmotoren elektromotorisch bzw. generatorisch gebremst werden können, ist es ein erfolgversprechender Ansatz, auf eine mechanische Bremse bei den hinteren Rädern zu verzichten und die Bremskräfte rein elektromotorisch zu realisieren. Als Konsequenz entfallen bei solchen Konfigurationen die mechanischen Komponenten der Betriebsbremse, also üblicherweise eine Bremsscheibe und ein Bremssattel einschließlich des Bremsklotzes, welche häufig auch als mechanische Basis für die Feststellbremse des Fahrzeugs fungieren. In solchen Situationen muss man also eine Feststellbremse bei den vorderen Rädern realisieren, was mit dem Nachteil verbunden ist, dass bei mechanischer Ausführung der Feststellbremse die Seilzüge den Lenkbewegungen folgen können müssen. Alternativ könnte auch eine zusätzliche mechanische Bremsanlage auf den hinteren Rädern zur reinen Darstellung der Funktion der Feststellbremse eingesetzt werden. Dies wiederum wäre mit dem Nachteil verbunden, dass zusätzliche Komponenten eingesetzt werden müssen, welche dann zu einer höheren Systemkomplexität und außerdem auch zu höheren Kosten führen würden.

Eine Antriebseinheit zum Antreiben eines Rades eines Fahrzeugs ist aus dem gattungsgemäßen Dokument EP 1 719 656 A1 bekannt. In diese Antriebseinheit ist eine Feststellbremse integriert, mittels welcher die Rotationsbewegung der Antriebseinheit blockiert werden kann.

Die Integration einer Feststellbremse in eine elektrische Maschine einer solchen Antriebseinheit ist des Weiteren aus dem Dokument WO 2008/062053 A1 bekannt.

Die DE 100 29 628 A1 beschreibt eine Drehmomentübertragungseinrichtung für ein Kraftfahrzeug, welche eine überlastgeschützte Parksperre aufweist. Ein Läufer eines Elektromotors ist in sämtlichen Betriebszuständen des Kraftfahrzeugs zumin dest mittels einer koaxial zu dem Läufer angeordneten Welle drehmomentübertragend mit den Antriebsrädern verbunden, wobei ein drehmomentübertragend mit dieser Welle verbundenes Parksperrenrad in dessen Drehrichtung formschlüssig und bewegungsfest gegenüber einem fahrzeugfesten Bauteil koppelbar ist.

Ein Fahrzeug mit einer Feststellbremse ist des Weiteren aus dem Dokument FR 2 936 206 A1 bekannt.

Es ist Aufgabe der Erfindung, einen Weg aufzuzeigen, wie die Funktionalität einer Radantriebseinheit der eingangs genannten Gattung im Vergleich zum Stand der Technik verbessert werden kann.

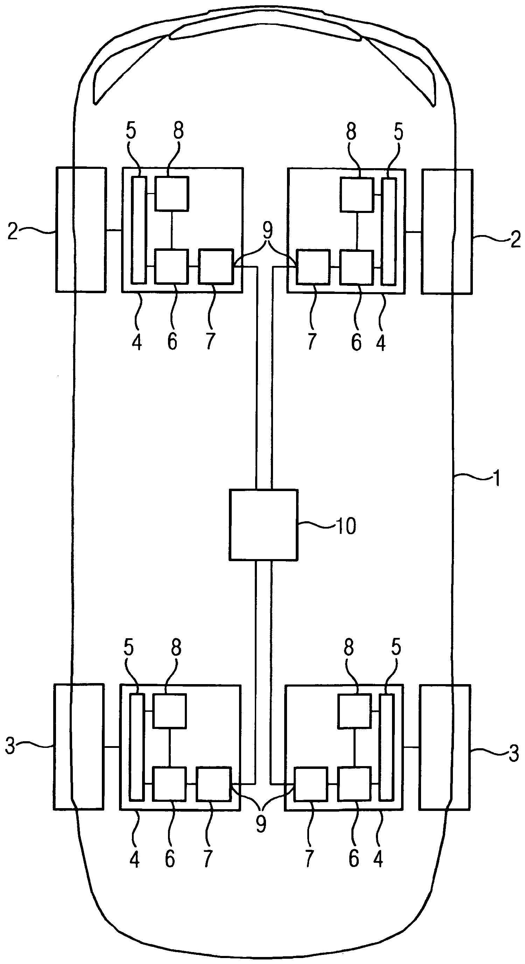

Erfindungsgemäß wird diese Aufgabe durch eine Radantriebseinheit, durch ein Fahrzeug sowie durch ein Verfahren mit den Merkmalen gemäß den jeweiligen unabhängigen Patentansprüchen gelöst. Vorteilhafte Ausführungen der Erfindung sind Gegenstand der abhängigen Patentansprüche, der Beschreibung und der Figur.

Eine erfindungsgemäße Radantriebseinheit für ein Rad eines elektrisch angetriebenen Fahrzeugs umfasst eine elektrische Maschine zum Antreiben des Rades, welche einen Stator und einen am Stator drehbar gelagerten Rotor aufweist, der mit dem Rad des Fahrzeugs verbindbar ist. Die Radantriebseinheit umfasst außerdem eine elektronische Steuereinrichtung zur Ansteuerung der elektrischen Maschine. Erfindungsgemäß ist vorgesehen, dass die Radantriebseinheit weiterhin eine Feststellbremse mit einem elektromechanischen Aktor aufweist, mittels welchem in einem Feststellmodus der Radantriebseinheit der Rotor der elektrischen Maschine gegenüber dem Stator mechanisch festgelegt ist. Vorzugsweise ist bei der erfindungsgemäßen Radantriebseinheit der Aktor am Stator der elektrischen Maschine angebracht.

Also wird zur Lösung der obigen Aufgabe vorgeschlagen, in die Radantriebseinheit eine Feststellbremse zu integrieren, welche dazu ausgebildet ist, den Rotor der elektrischen Maschine gegenüber dem Stator auf mechanischem Wege zu fixieren und somit das Rad des Fahrzeugs festzulegen. Durch Festlegen des Rotors gegenüber dem Stator wird somit die Funktion einer Feststellbremse realisiert, und zwar ohne dass zusätzliche, von der Radantriebseinheit separate mechanische Komponenten eingesetzt werden müssen. Die Radantriebseinheit übernimmt somit neben der Funktion des Antreibens des Rades und gegebenenfalls auch der Funktion der Betriebsbremse zusätzlich noch die Funktion der Feststellbremse. Die Erfindung beruht dabei auf der Erkenntnis, dass bei einem Fahrzeug mit Radantriebseinheiten, und insbesondere mit Nabenmotoren, vollständig auf eine mechanische Bremse der Hinterachse verzichtet werden kann und die Betriebsbremse rein elektromotorisch realisiert werden kann. Die Erfindung baut weiterhin auf der Erkenntnis auf, dass bei solchen Konfigurationen somit die mechanischen Komponenten der Betriebsbremse entfallen, welche oft als mechanische Basis für die Feststellbremse fungieren. Die Erfindung basiert weiterhin auf der Erkenntnis, dass somit die gesetzlich geforderte Darstellung der Feststellbremsenfunktion in solchen Konfigurationen alternativ gelöst werden muss. Die Erfindung geht nun den Weg, die zum Antreiben der jeweiligen Räder eingesetzte Radantriebseinheit mit einer Feststellbremse einschließlich eines elektromechanischen Aktors auszustatten, welcher zur mechanischen Festlegung des Rotors bezüglich des Stators ausgebildet ist. Zur Realisierung der Funktion der Feststellbremse kommt das Fahrzeug folglich vorzugsweise ausschließlich mit der Radantriebseinheit oder aber mit mehreren solchen Einheiten aus, ohne dass zusätzliche mechanische Komponenten separat zu den Radantriebseinheiten eingesetzt werden müssen. Somit ergibt sich insgesamt eine höhere Integrationsdichte des gesamten Fahrzeugs, weil die Radantriebseinheit vorzugsweise mit den Funktionen Antrieb, Betriebsbremse und Feststellbremse direkt auf den Radträger montiert werden kann. Außerdem können die bereits vorhandenen Schnittstellen der Radantriebseinheiten sowie die bereits vorhandenen Steuerungseinrichtungen auch zur Ansteuerung der Feststellbremse genutzt werden. Nicht zuletzt ergibt sich aufgrund der hohen Schutzklasse von Radnabenmotoren auch ein verringerter Wartungsaufwand der Radantriebseinheit.

Also hat die Radantriebseinheit einen spezifischen Feststellmodus, in welchem der Rotor mithilfe des elektromechanischen Aktors blockiert ist. Dieser Feststellmodus wird vorzugsweise dann aktiviert, wenn der Fahrer des Fahrzeugs eine entsprechende Handlung an einer Bedieneinrichtung vornimmt, nämlich die Feststellbremse aktiviert.

In einer Ausführungsform ist vorgesehen, dass in dem Feststellmodus der Rotor mittels des Aktors zumindest kraftschlüssig, und insbesondere kraftschlüssig und formschlüssig, festgelegt ist. Bei einer kraftschlüssigen Festlegung kann ein Reibungselement eingesetzt werden, welches eine Reibungskraft auf den Rotor der elektrischen Maschine aufbringt und somit die Bewegung des Rotors durch diese Reibungskraft hemmt. Zur Realisierung des Formschlusses kann hingegen ein Blockierelement - beispielsweise ein Bolzen oder dergleichen - eingesetzt werden, welches in eine korrespondierende Aufnahme in dem Rotor aufgenommen werden kann und somit den Rotor formschlüssig in Umfangsrichtung blockieren kann. Eine solche formschlüssige Blockierung des Rotors beinhaltet also auch den Kraftschluss. Diese Ausführungsformen sorgen einerseits für eine zuverlässige und rutschfeste Fixierung des Rotors im Feststellmodus und andererseits auch dafür, dass die Feststellbremse der Radantriebseinheit auch mit geringem technischen Aufwand realisiert werden kann.

Die elektronische Steuereinrichtung weist unterschiedliche Funktionen auf, nämlich einerseits die Funktion der Ansteuerung der elektrischen Maschine und andererseits auch die Funktion der Ansteuerung des Aktors der Feststellbremse. Ein und dieselbe Steuereinrichtung - nämlich insbesondere ein Mikrocontroller - übernimmt somit die Ansteuerung der elektrischen Maschine und außerdem auch die Steuerung der Feststellbremse. Somit ist die Steuereinrichtung multifunktional ausgebildet, sodass die Anzahl der eingesetzten Komponenten auf ein Minimum reduziert werden kann. Somit können einerseits die Kosten gespart werden; andererseits kann somit auch der wertvolle Bauraum gespart werden, und die Radantriebseinheit kann besonders kompakt aufgebaut werden.

Vorzugsweise ist der Aktor der Feststellbremse als bistabiler Aktor ausgebildet, welcher zwischen zwei verschiedenen, stabilen Stellungen bewegbar bzw. schaltbar ist. So kann der Aktor zwischen einer ersten Stellung, in welcher der Aktor den Rotor freigibt, und einer zweiten Stellung geschaltet werden, in welcher der Rotor gegenüber dem Stator mechanisch festgelegt ist. Diese Ausführungsform hat den Vorteil, dass die elektrische Energie nur dann verbraucht wird, wenn der Aktor von der einen Stellung in die andere Stellung gebracht wird, wenn also die Feststellbremse aktiviert bzw. deaktiviert wird. Ansonsten verbraucht die Feststellbremse keine Energie, weil aufgrund der bistabilen Ausgestaltung des Aktors keine Energie erforderlich ist, um den Aktor in der jeweiligen Stellung zu halten bzw. die jeweilige Stellung aufrechterhalten zu können. Ein solcher bistabiler Aktor kann beispielsweise ähnlich wie die so genannten "bistabilen Relais" aufgebaut sein.

Die Steuereinrichtung weist eine Schnittstelle zur Kommunikation mit einem Fahrzeugsteuergerät auf. Über diese Schnittstelle kann die Steuereinrichtung sowohl Antriebssteuerbefehle bezüglich des Antreibens des Rades als auch Bremssteuerbefehle empfangen, aufgrund welcher die Radantriebseinheit in den Feststellmodus schaltbar ist, in welchem die Feststellbremse aktiviert ist. Es kann folglich eine ohnehin bereits vorhandene Schnittstelle genutzt werden, um zusätzlich noch Steuerbefehle bezüglich der Ansteuerung der Feststellbremse an die Steuereinrichtung übertragen zu können. Die Steuereinrichtung braucht somit nicht in aufwändiger Weise umgestaltet zu werden, sondern es können bereits vorhandene Steuereinrichtung eingesetzt werden.

Es kann vorgesehen sein, dass die Feststellbremse über ein und dieselbe Leistungselektronik versorgt bzw. angesteuert wird, über welche auch die elektrische Maschine mit elektrischer Energie versorgt wird. Bei der Leistungselektronik kann ein elektrischer Zwischenkreis bereitgestellt sein, in welchem eine elektrische Zwischenkreisspannung an einem Zwischenkreiskondensator bereitgestellt wird. Diese Spannung kann dann sowohl zur Versorgung der Feststellbremse als auch zur Versorgung der elektrischen Maschine dienen. Beispielsweise beinhaltet die gemeinsame Leistungselektronik einen Wechselrichter, welcher aus der Zwischenkreisspannung eine Wechselspannung für die elektrische Maschine bereitstellen kann. Dieser Wechselrichter kann auch dazu genutzt werden, elektrische Energie auch für die Feststellbremse bereitzustellen. Die Anzahl der verwendeten Komponenten ist somit auf ein Minimum reduziert.

Vorzugsweise weist die Radantriebseinheit einen von dem Feststellmodus verschiedenen Betriebsbremsmodus auf, und die Steuereinrichtung ist dazu ausgelegt, in dem Betriebsbremsmodus den Rotor elektronisch abzubremsen. Dies bedeutet, dass die Radantriebseinheit neben der Funktion der Feststellbremse auch die Funktion der Betriebsbremse übernimmt bzw. unterstützt, indem der Rotor der elektrischen Maschine elektromotorisch bzw. generatorisch abgebremst wird. Somit kann sogar gegebenenfalls auf die mechanischen Bremsen verzichtet werden, nämlich insbesondere bei den hinteren Rädern des Fahrzeugs.

Bevorzugt ist die elektrische Maschine eine permanentmagneterregte Synchronmaschine. Bei einer solchen Maschine kann der Rotor Permanentmagnete tragen, während der Stator eine Statorwicklung mit insbesondere drei Phasensträngen aufweisen kann.

Die Radantriebseinheit ist bevorzugt eine Nabenantriebseinheit bzw. ein Nabenmotor. Alternativ kann sie auch als radnahe Antriebseinheit eingesetzt werden.

Ein erfindungsgemäßes elektrisch angetriebenes Fahrzeug, insbesondere ein Kraftfahrzeug, weist ein Rad und eine erfindungsgemäße Radantriebseinheit auf, welche zum Antreiben des Rades ausgebildet ist.

Bei dem Fahrzeug kann vorgesehen sein, dass unter Verzicht auf eine von der Radantriebseinheit separate mechanische Bremse das Rad ausschließlich mittels der Radantriebseinheit bremsbar ist. Es erübrigt sich daher der Einsatz einer mechanischen Bremse mit den damit verbundenen Nachteilen hinsichtlich des Verschleißes, des Bauraums und der Kosten.

Das genannte Rad ist vorzugsweise ein Rad der hinteren Achse des Fahrzeugs, also ein hinteres Rad.

Es kann auch vorgesehen sein, dass jedem Rad einer Achse, insbesondere jedem Rad der hinteren Achse, jeweils eine genannte erfindungsgemäße Radantriebseinheit zugeordnet ist.

Ein erfindungsgemäßes Verfahren dient zum Betreiben einer Radantriebseinheit eines elektrisch angetriebenen Fahrzeugs, wobei mittels einer elektrischen Maschine der Radantriebseinheit ein Rad des Fahrzeugs angetrieben wird und die elektrische Maschine einen Stator und einen am Stator drehbar gelagerten Rotor aufweist, der mit dem Rad verbunden ist, und wobei mittels einer elektronischen Steuereinrichtung die elektrische Maschine angesteuert wird. In einem Feststellmodus der Radantriebseinheit wird der Rotor der elektrischen Maschine mittels eines, vorzugsweise an dem Stator der elektrischen Maschine angebrachten, Aktors einer Feststellbremse der Radantriebseinheit gegenüber dem Stator mechanisch festgelegt.

Die mit Bezug auf die erfindungsgemäße Radantriebseinheit vorgestellten bevorzugten Ausführungsformen und deren Vorteile gelten entsprechend für das erfindungsgemäße Fahrzeug sowie für das erfindungsgemäße Verfahren.

Weitere Merkmale der Erfindung ergeben sich aus den Ansprüchen, der Figur und der Figurenbeschreibung. Alle vorstehend in der Beschreibung genannten Merkmale und Merkmalskombinationen sowie die nachfolgend in der Figurenbeschreiung genannten und/oder in der Figur alleine gezeigten Merkmale und Merkmalskombinationen sind nicht nur in der jeweils angegebenen Kombination, sondern auch in anderen Kombinationen oder aber in Alleinstellung verwendbar.

Die Erfindung wird nun anhand eines bevorzugten Ausführungsbeispiels, wie auch unter Bezugnahme auf die beigefügte Zeichnung näher erläutert. Dabei veranschaulicht die einzige Figur in schematischer Darstellung ein Fahrzeug gemäß einer Ausführungsform der Erfindung.

Ein in der Figur in schematischer und höchst abstrakter Darstellung gezeigtes Fahrzeug 1 ist im Ausführungsbeispiel ein elektrisch angetriebenes Fahrzeug, nämlich insbesondere ein Personenkraftwagen. Das Fahrzeug 1 weist bekanntlich vier Räder auf, nämlich zwei vordere Räder 2 sowie zwei hintere Räder 3. Im Ausführungsbeispiel ist zu jedem Rad 2, 3 jeweils eine separate Radantriebseinheit 4 bereitgestellt, welche sowohl zum Antreiben als auch zum Abbremsen des jeweiligen Rades 2, 3 ausgebildet ist. Alternativ kann auch vorgesehen sein, dass lediglich den hinteren Rädern 3 eine solche Radantriebseinheit 4 zugeordnet ist, sodass ausschließlich insgesamt zwei solche Einheiten vorgesehen sind.

Die Radantriebseinheiten 4 sind insbesondere Radnabenmotoren, welche in einer Nabe des jeweiligen Rades 2, 3 angeordnet sind. Es können aber auch so genannte radnahe Motoren eingesetzt werden, welche nicht direkt in der Nabe, sondern in einem geringen Abstand zu dem jeweiligen Rad 2, 3 angeordnet sind.

Die Radantriebseinheiten 4 weisen jeweils eine elektrische Maschine 5 auf, welche im Ausführungsbeispiel als permanentmagneterregte Synchronmaschine bzw. als so genannter bürstenloser Gleichstrommotor ausgebildet ist. Die elektrische Maschine 5 hat bekanntlich einen Rotor, der mit dem jeweiligen Rad 2, 3 drehfest verbunden ist, sowie einen Stator, an welchem der Rotor drehbar gelagert ist. Während der Rotor Permanentmagnete trägt, weist der Stator eine elektrische Statorwicklung auf, die beispielsweise drei Phasenstränge umfassen kann. Die Anzahl der Phasenstränge ist hier lediglich beispielhaft genannt, und die Statorwicklung kann auch eine andere Anzahl von solchen Phasensträngen aufweisen, nämlich beispielsweise zwei oder vier. Die Statorwicklung ist mit einer Leistungselektronik 6 elektrisch gekoppelt, welche beispielsweise einen Wechselrichter bzw. Inverter aufweisen kann. Dieser Inverter stellt aus einer Zwischenkreisgleichspannung eine elektrische Wechselspannung für jeden Phasenstrang der Statorwicklung bereit. Die Leistungselektronik wird mithilfe einer elektronischen Steuereinrichtung 7 angesteuert, die als Mikrocontroller oder dergleichen ausgeführt sein kann.

Also steuert die Steuereinrichtung 7 die elektrische Maschine 5 an. Diese Ansteuerung erfolgt über die Leistungselektronik 6. Die Leistungselektronik 6 kann mit einer in der Figur nicht näher dargestellten Fahrzeugbatterie verbunden sein, welche insgesamt zur Versorgung aller Radantriebseinheiten 4 dienen kann.

Die Radantriebseinheiten 4 weisen außerdem jeweils eine Feststellbremse 8 auf, welche zum Fixieren des jeweiligen Rades 2, 3 im Stillstand des Kraftfahrzeugs 1 dient. Zwar ist in der Figur gezeigt, dass jede Radantriebseinheit 4 eine solche Feststellbremse 8 aufweisen kann, jedoch kann alternativ auch vorgesehen sein, dass beispielsweise nur die hinteren Radantriebseinheiten 4 jeweils eine solche Feststellbremse 8 aufweisen.

Die jeweilige Feststellbremse 8 hat einen elektromechanischen Aktor, welcher zur mechanischen Festlegung des jeweiligen Rotors gegenüber dem Stator ausgebildet ist. Der Aktor übernimmt also die Funktion der Feststellbremse und kann beispielsweise am Stator der elektrischen Maschine 5 angebracht sein. Der Aktor kann den Rotor, welcher direkt mit dem jeweiligen Rad 2, 3 verbunden ist, ausreichend hemmen oder sogar dauerhaft blockieren. Es ist beispielsweise möglich, eine formschlüssige Blockierung des jeweiligen Rotors zu realisieren, indem zum Beispiel ein Bolzen oder dergleichen in eine radiale oder aber axiale Öffnung des Rotors aufgenommen wird. Dabei kann der Aktor zwischen zwei verschiedenen Stellungen bewegt werden, nämlich zwischen einer ersten Stellung, in welcher sich der Rotor drehen kann, und einer zweiten Stellung, in welcher der Rotor mittels des Aktors blockiert ist. Dabei erweist es sich als besonders vorteilhaft, wenn der Aktor als bistabiles Funktionselement ausgeführt ist, sodass jeweils elektrische Energie nur zur Umsetzung des Zustandswechsels bzw. zur Bewegung des Aktors zwischen der einen und der anderen Stellung benötigt wird. Es kann auch vorgesehen sein, dass die Versorgung des Aktors mit elektrischer Energie mithilfe der bereits vorhandenen Leistungselektronik 6 realisiert wird, was in der Figur mit einer Verbindung zwischen der Leistungselektronik 6 und der Feststellbremse 8 schematisch angedeutet ist.

Die jeweilige Steuereinrichtung 7 dient sowohl zur Ansteuerung der jeweiligen elektrischen Maschine 5 als auch zur Ansteuerung der Feststellbremse 8. Die jeweilige Feststellbremse 8 wird - wie bereits ausgeführt - über die zugehörige Leistungselektronik 6 mit elektrischer Energie versorgt. Es brauchen somit keine zusätzlichen Steuereinheiten sowie keine zusätzlichen Leistungskomponenten eingesetzt zu werden.

Die Feststellbremsen 8 dienen also zum Fixieren der jeweiligen Räder 2, 3 im Stillstand des Fahrzeugs 1. Dieses Fixieren erfolgt also in einem Feststellmodus der Radantriebseinheiten 4, also bei aktivierter Feststellbremse 8. Neben diesem Feststellmodus können die Radantriebseinheiten auch einen Betriebsbremsmodus aufweisen, in welchem die Radantriebseinheiten 4 auch die komplette Funktion der Betriebsbremse übernehmen, wobei dies vorzugsweise ausschließlich bei den hinteren Radantriebseinheiten 4 vorgesehen ist. Weil die gesetzlichen Vorgaben erfordern, dass die Feststellbremse 8 ein von der Betriebsbremse unabhängiges System sein muss, liegt vorliegend ein Kerngedanke darin, dieses System bzw. die Feststellbremse 8 in die Radantriebseinheit 4 zu integrieren.

Die Steuereinrichtungen 7 weisen außerdem jeweils eine Schnittstelle 9 auf, über welche die Steuereinrichtungen 7 mit einem Fahrzeugsteuergerät 10 elektrisch gekoppelt sind. Von dem Fahrzeugsteuergerät 10 können die Steuereinrichtungen 7 Steuerbefehle bezüglich der Ansteuerung der elektrischen Maschine 5 einerseits sowie bezüglich der Ansteuerung der Feststellbremse 8 andererseits empfangen. Das Fahrzeugsteuergerät 10 kann somit an die Steuereinrichtungen 7 einerseits Antriebssteuerbefehle bzw. Betriebsbremssteuerbefehle übermitteln, welche auf die Ansteuerung der elektrischen Maschine 5 und somit auf das Antreiben des jeweiligen Rades 2, 3 und auf das Betriebsbremsen bezogen sind. Andererseits kann das Fahrzeugsteuergerät 10 an die Steuereinrichtungen 7 auch Bremssteuerbefehle bezüglich der Feststellbremse 8 übermitteln. Aufgrund dieser Befehle wird der oben genannte Aktor zwischen der ersten und der zweiten Stellung bewegt bzw. die Feststellbremse 8 aktiviert bzw. deaktiviert.

## Patentansprüche

1. Radantriebseinheit (4), insbesondere Nabenantriebseinheit, für ein Rad (2, 3) eines elektrisch angetriebenen Fahrzeugs (1), mit einer elektrischen Maschine (5) zum Antreiben des Rades (2, 3), welche einen Stator und einen am Stator drehbar gelagerten Rotor aufweist, der mit dem Rad (2, 3) des Fahrzeugs (1) verbindbar ist, und mit einer elektronischen Steuereinrichtung (7) zum Ansteuern der elektrischen Maschine (5), wobei
die Radantriebseinheit (4) eine Feststellbremse (8) mit einem elektromechanischen Aktor aufweist, mittels welchem in einem Feststellmodus der Radantriebseinheit (4) der Rotor der elektrischen Maschine (5) gegenüber dem Stator mechanisch festgelegt ist,
**dadurch gekennzeichnet, dass**
die Steuereinrichtung (7) zum Ansteuern des Aktors ausgebildet ist und eine Schnittstelle (9) zur Kommunikation mit einem Fahrzeugsteuergerät (10) aufweist und dazu ausgelegt ist, über die Schnittstelle (9) sowohl Antriebssteuerbefehle bezüglich des Antreibens des Rades (2, 3) als auch Bremssteuerbefehle zu empfangen, aufgrund deren die Radantriebseinheit (4) in den Feststellmodus schaltbar ist.

2. Radantriebseinheit (4) nach Anspruch 1, **dadurch gekennzeichnet, dass** in dem Feststellmodus der Rotor mittels des Aktors zumindest kraftschlüssig, insbesondere formschlüssig und kraftschlüssig, festgelegt ist.

3. Radantriebseinheit (4) nach einem der vorhergehenden Ansprüche, **dadurch gekennzeichnet, dass** der Aktor als bistabiler Aktor ausgebildet ist, welcher zwischen einer ersten Stellung, in welcher der Aktor den Rotor freigibt, und einer zweiten Stellung schaltbar ist, in welcher der Rotor gegenüber dem Stator mechanisch festgelegt ist.

4. Radantriebseinheit (4) nach einem der vorhergehenden Ansprüche, **dadurch gekennzeichnet, dass** die Radantriebseinheit (4) einen von dem Feststellmodus verschiedenen Betriebsbremsmodus aufweist und die Steuereinrichtung (7) dazu ausgelegt ist, in dem Betriebsbremsmodus den Rotor elektronisch abzubremsen.

5. Radantriebseinheit (4) nach einem der vorhergehenden Ansprüche, **dadurch gekennzeichnet, dass** die elektrische Maschine (5) als permanentmagneterregte Synchronmaschine ausgebildet ist.

6. Elektrisch angetriebenes Fahrzeug (1), insbesondere Kraftfahrzeug, mit einem Rad (2, 3) und mit einer Radantriebseinheit (4) nach einem der vorhergehenden Ansprüche, welche zum Antreiben des Rades (2, 3) ausgebildet ist.

7. Fahrzeug (1) nach Anspruch 6, **dadurch gekennzeichnet, dass** unter Verzicht auf eine von der Radantriebseinheit (4) separate mechanische Bremse das Rad (2, 3) ausschließlich mittels der Radantriebseinheit (4) bremsbar ist.

8. Fahrzeug (1) nach Anspruch 6 oder 7, **dadurch gekennzeichnet, dass** das Rad (2, 3) ein Rad (2, 3) der hinteren Achse des Fahrzeugs (1) ist.

9. Fahrzeug (1) nach einem der Ansprüche 6 bis 8, **dadurch gekennzeichnet, dass** jedem Rad (2, 3) einer Achse, insbesondere jedem Rad (2, 3) der hinteren Achse, jeweils eine genannte Radantriebseinheit (4) zugeordnet ist.

## Claims

1. Wheel drive unit (4), in particular hub drive unit, for a wheel (2, 3) of an electrically driven vehicle (1), having an electrical machine (5) for driving the wheel (2, 3), which electrical machine (5) has a stator and a rotor which is rotatably mounted on the stator and can be connected to the wheel (2, 3) of the vehicle (1), and having an electronic control device (7) for actuating the electrical machine (5), wherein
the wheel drive unit (4) has a parking brake (8) with an electromechanical actuator by means of which, in a parking mode of the wheel drive unit (4), the rotor of the electrical machine (5) is secured mechanically with respect to the stator,
**characterized in that**
the control device (7) is designed to actuate the actuator and has an interface (9) for communicating with a vehicle control unit (10) and is configured to receive, via the interface (9), both drive control instructions relating to the driving of the wheel (2, 3) and brake control instructions on the basis of which the wheel drive unit (4) can be switched to the parking mode.

2. Wheel drive unit (4) according to Claim 1, **characterized in that**, in the parking mode, the rotor is secured in an at least frictionally locking fashion, in particular positively locking fashion and frictionally locking fashion, by means of the actuator.

3. Wheel drive unit (4) according to one of the preceding claims, **characterized in that** the actuator is embodied as a bistable actuator which can be switched between a first position, in which the actuator releases the rotor, and a second position in which the rotor is secured mechanically with respect to the stator.

4. Wheel drive unit (4) according to one of the preceding claims, **characterized in that** the wheel drive unit (4) has a service brake mode which is different from the parking mode, and the control device (7) is configured to brake the rotor electronically in the service brake mode.

5. Wheel drive unit (4) according to one of the preceding claims, **characterized in that** the electrical machine (5) is embodied as a permanent-magnetic excited synchronous machine.

6. Electrically driven vehicle (1), in particular motor vehicle, having a wheel (2, 3) and having a wheel drive unit (4) according to one of the preceding claims, which wheel drive unit (4) is designed to drive the wheel (2, 3).

7. Vehicle (1) according to Claim 6, **characterized in that** the wheel (2, 3) can be braked exclusively by means of the wheel drive unit (4) while dispensing with a mechanical brake which is separate from the wheel drive unit (4).

8. Vehicle (1) according to Claim 6 or 7, **characterized in that** the wheel (2, 3) is a wheel (2, 3) of the rear axle of the vehicle (1).

9. Vehicle (1) according to one of Claims 6 to 8, **characterized in that** each wheel (2, 3) is assigned an axle, in particular each wheel (2, 3) of the rear axle is respectively assigned a specified wheel drive unit (4).

## Revendications

1. Unité d'entraînement de roue (4), en particulier unité d'entraînement de moyeu, pour une roue (2, 3) d'un véhicule à entraînement électrique (1), avec un moteur électrique (5) destiné à l'entraînement de la roue (2, 3), lequel présente un stator et un rotor monté de manière à pouvoir tourner au niveau du stator, lequel rotor peut être relié à la roue (2, 3) du véhicule (1), et avec un dispositif de commande électronique (7) destiné à la commande du moteur électrique (5), dans laquelle l'unité d'entraînement de roue (4) présente un frein de stationnement (8) avec un actionneur électromagnétique, au moyen duquel dans un mode de stationnement de l'unité d'entraînement de roue (4) le rotor du moteur électrique (5) est bloqué mécaniquement par rapport au stator, **caractérisée en ce que** le dispositif de commande (7) est configuré pour la commande de l'actionneur et présente une interface (9) destinée à la communication avec un appareil de commande de véhicule (10) et est conçu pour recevoir par le biais de l'interface (9) aussi bien des instructions de commande d'entraînement relatives à l'entraînement de la roue (2, 3) que des instructions de commande de freinage, en raison desquelles l'unité d'entraînement de roue (4) peut être commutée en mode de stationnement.

2. Unité d'entraînement de roue (4) selon la revendication 1, **caractérisée en ce que**, en mode de stationnement, le rotor est bloqué au moyen de l'actionneur au moins par complémentarité de forces, en particulier par complémentarité de formes et par complémentarité de forces.

3. Unité d'entraînement de roue (4) selon l'une des revendications précédentes, **caractérisée en ce que** l'actionneur est configuré en tant qu'actionneur bistable, lequel peut commuter entre une première position, dans laquelle l'actionneur libère le rotor, et une deuxième position, dans laquelle le rotor est bloqué mécaniquement par rapport au stator.

4. Unité d'entraînement de roue (4) selon l'une des revendications précédentes, **caractérisée en ce que** l'unité d'entraînement de roue (4) présente un mode de freinage de service différent du mode de stationnement et le dispositif de commande (7) est conçu pour faire ralentir électroniquement le rotor en mode de freinage de service.

5. Unité d'entraînement de roue (4) selon l'une des revendications précédentes, **caractérisée en ce que** le moteur électrique (5) est configuré en tant que moteur synchrone excité par des aimants permanents.

6. Véhicule à entraînement électrique (1), en particulier un véhicule automobile, avec une roue (2, 3) et avec une unité d'entraînement de roue (4) selon l'une des revendications précédentes, laquelle est configurée pour l'entraînement de la roue (2, 3).

7. Véhicule (1) selon la revendication 6, **caractérisé en ce que** par le renoncement à un frein mécanique séparé de l'unité d'entraînement de roue (4) la roue (2, 3) peut être freinée exclusivement au moyen de l'unité d'entraînement de roue (4).

8. Véhicule (1) selon la revendication 6 ou 7, **caractérisé en ce que** la roue (2, 3) est une roue (2, 3) de l'essieu arrière du véhicule (1).

9. Véhicule (1) selon l'une des revendications 6 à 8, **caractérisé en ce qu'**à chaque roue (2, 3) d'un essieu, en particulier à chaque roue (2, 3) de l'essieu arrière, est associée respectivement une unité dite unité d'entraînement de roue (4).
